(19) Europäisches Patentamt
European Patent Office
Office européen des brevets

(11) **EP 4 224 569 A1**

(12) **EUROPEAN PATENT APPLICATION**
published in accordance with Art. 153(4) EPC

(43) Date of publication:
**09.08.2023 Bulletin 2023/32**

(21) Application number: **21875093.3**

(22) Date of filing: **06.09.2021**

(51) International Patent Classification (IPC):
**H01M 4/14** (2006.01)    **H01M 4/68** (2006.01)
**H01M 10/18** (2006.01)

(52) Cooperative Patent Classification (CPC):
**H01M 4/14; H01M 4/68; H01M 10/18;** Y02E 60/10

(86) International application number:
**PCT/JP2021/032702**

(87) International publication number:
**WO 2022/070791 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020165685**

(71) Applicants:
• **FURUKAWA ELECTRIC CO., LTD.
Chiyoda-ku
Tokyo 100-8322 (JP)**
• **The Furukawa Battery Co., Ltd.
Yokohama-shi, Kanagawa-ken 240-0006 (JP)**

(72) Inventors:
• **TANAKA ,Hiroki
Tokyo 100-8322 (JP)**
• **NAKAJIMA, Yasuo
Tokyo 100-8322 (JP)**
• **SUYAMA, Kenichi
Tokyo 100-8322 (JP)**
• **KOIDE ,Ayano
Jyoban-shimofunao-machi, Iwaki-shi,
Fukushima 972-
8501 (JP)**

(74) Representative: **Grünecker Patent- und
Rechtsanwälte
PartG mbB
Leopoldstraße 4
80802 München (DE)**

(54) **BIPOLAR LEAD-ACID BATTERY**

(57)    Provided is a bipolar lead-acid battery in which the electrolyte is less likely to infiltrate into the interface between a positive electrode lead layer and an adhesive layer, deterioration in battery performance is less likely to occur. A positive electrode (120) of a bipolar electrode (130) of a bipolar lead-acid battery (1) includes a positive electrode lead layer (101) that is formed of lead or lead alloy and is disposed on one surface of a substrate (111), and an adhesive layer (140) that is disposed between the one surface of the substrate (111) and the positive electrode lead layer (101) and bonds the one surface of the substrate (111) and the positive electrode lead layer (101). The substrate (111) is formed of a thermoplastic resin, and the adhesive layer (140) is formed of a cured product of a reaction-curing type adhesive that is cured by reaction between a main agent containing an epoxy resin and a curing agent containing an amine compound. Even in a case where the adhesive layer (140) is immersed in a sulfuric acid with a concentration of 38% by mass at a temperature of 60°C for four weeks, the sulfuric acid does not infiltrate into the interface between the positive electrode lead layer (101) and the adhesive layer (140).

FIG. 2

130

**Description**

Technical Field

The present invention relates to a bipolar lead-acid battery.

Background Art

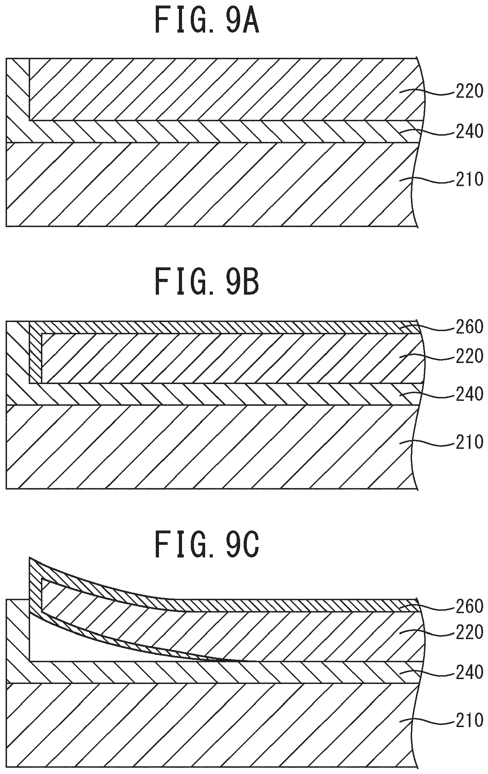

A bipolar lead-acid battery includes a bipolar electrode having a positive electrode formed on one surface and a negative electrode formed on the other surface. As illustrated in FIG. 9A, a positive electrode of a conventional bipolar electrode includes a positive electrode lead layer 220 disposed on one surface of a substrate 210 formed of a resin with an adhesive layer 240 interposed therebetween, and a positive active material [PAM] layer (not illustrated) disposed on the positive electrode lead layer 220.

Citation List

Patent Literature

PTL 1: WO 2013/073420

Summary of Invention

Technical Problem

In the bipolar lead-acid battery as described above, the positive electrode lead layer 220 is corroded by the sulfuric acid contained in the electrolyte to form a film 260 of a corrosion product (lead oxide) on the surface of the positive electrode lead layer 220 (refer to FIG. 9B), and there is a risk that the growth of the film 260 of the corrosion product causes elongation (growth) of the positive electrode lead layer 220. Then, there is a risk that the positive electrode lead layer 220 and the adhesive layer 240 are peeled off by the growth, and the electrolyte infiltrates into the interface between the positive electrode lead layer 220 and the adhesive layer 240 to cause further progression of corrosion of the positive electrode lead layer 220 by the sulfuric acid (refer to FIG. 9C). As a result, when the corrosion reaches, for example, the back surface of the positive electrode lead layer 220 (the surface facing the substrate 210), a short circuit may occur or the like, and battery performance may deteriorate in some cases.

An obj ect of the present invention is to provide a bipolar lead-acid battery in which, even when growth occurs in a positive electrode lead layer due to corrosion caused by sulfuric acid contained in an electrolyte, the electrolyte is less likely to infiltrate into the interface between the positive electrode lead layer and an adhesive layer, and deterioration in battery performance is less likely to occur.

Solution to Problem

A bipolar lead-acid battery according to an aspect of the present invention is a bipolar lead-acid battery including a bipolar electrode having a positive electrode formed on one surface of a substrate and a negative electrode formed on the other surface, in which the positive electrode includes a positive electrode lead layer that is formed of lead or lead alloy and disposed on the one surface of the substrate, a positive active material layer that is disposed on the positive electrode lead layer, and an adhesive layer that is disposed between the one surface of the substrate and the positive electrode lead layer and bonds the one surface of the substrate and the positive electrode lead layer, the substrate is formed of a thermoplastic resin, the adhesive layer is formed of a cured product of a reaction-curing type adhesive that is cured by a reaction between a main agent containing an epoxy resin and a curing agent containing an amine compound, and even in a case where the adhesive layer is immersed in a sulfuric acid with a concentration of 38% by mass at a temperature of 60°C for four weeks, the sulfuric acid does not infiltrate into an interface between the positive electrode lead layer and the adhesive layer.

Advantageous Effects of Invention

According to the present invention, even when growth occurs in a positive electrode lead layer due to corrosion caused by a sulfuric acid contained in an electrolyte, the electrolyte is less likely to infiltrate into the interface between the positive electrode lead layer and an adhesive layer, and deterioration in battery performance is less likely to occur.

Brief Description of Drawings

FIG. 1 is a cross-sectional view illustrating the structure of a first embodiment of a bipolar lead-acid battery according to the present invention;

FIG. 2 is an enlarged cross-sectional view of a bipolar electrode for describing the structure of the main part of the bipolar lead-acid battery in FIG. 1;

FIGS. 3A and 3B are explanatory diagrams illustrating a state in which even when growth occurs in a positive electrode lead layer due to corrosion caused by a sulfuric acid contained in an electrolyte in the bipolar lead-acid battery in FIG. 1, the electrolyte is prevented from infiltrating into an interface between the positive electrode lead layer and an adhesive layer;

FIG. 4 is an enlarged cross-sectional view of the bipolar electrode for explaining the structure of the main part of a second embodiment of the bipolar lead-acid battery according to the present invention;

FIG. 5 is a plan view of the bipolar electrode for explaining the structure of the main part of the bipolar lead-acid battery in FIG. 4;

FIG. 6 is an enlarged cross-sectional view of the bipolar electrode for explaining the structure of the main part of a third embodiment of the bipolar lead-acid battery according to the present invention;

FIG. 7 is an enlarged cross-sectional view of the bipolar electrode for explaining the structure of the main part of a fourth embodiment of the bipolar lead-acid battery according to the present invention;

FIG. 8 is an enlarged cross-sectional view of the bipolar electrode for explaining the structure of the main part of a fifth embodiment of the bipolar lead-acid battery according to the present invention; and

FIGS. 9A, 9B, and 9C are explanatory diagrams illustrating a state in which as a result of growth occurring in a positive electrode lead layer due to corrosion caused by a sulfuric acid contained in an electrolyte in a conventional bipolar lead-acid battery, the electrolyte infiltrates into an interface between the positive electrode lead layer and an adhesive layer.

Description of Embodiments

An embodiment of the present invention will be described. The embodiments described below show an example of the present invention. In addition, various changes or improvements can be applied to the present embodiment, and forms to which such changes or improvements are applied can also be included in the present invention.

[First Embodiment]

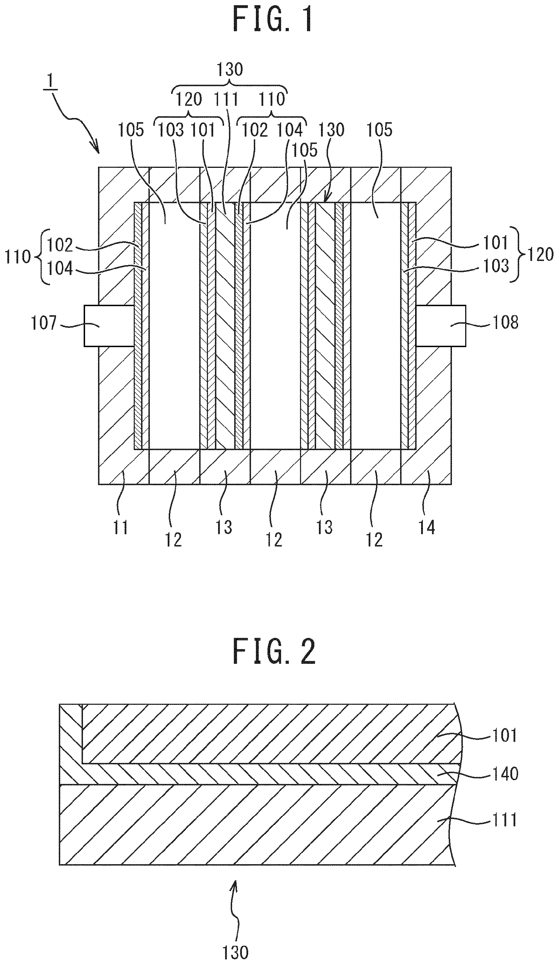

The structure of the bipolar lead-acid battery 1 of the first embodiment will be described with reference to FIGS. 1 and 2. The bipolar lead-acid battery 1 illustrated in FIG. 1 includes a first plate unit in which a negative electrode 110 is fixed to a flat plate-like first plate 11, a second plate unit in which an electrolytic layer 105 is fixed inside a frame plate-like second plate 12, a third plate unit in which a bipolar electrode 130 having a positive electrode 120 formed on one surface of a substrate 111 and the negative electrode 110 formed on the other surface is fixed inside a frame plate-like third plate 13, and a fourth plate unit in which the positive electrode 120 is fixed to a flat plate-like fourth plate 14. The substrate 111 is formed of a thermoplastic resin.

By alternately laminating the second plate unit and the third plate unit between the first plate unit and the fourth plate unit, the bipolar lead-acid battery 1 having a substantially rectangular parallelepiped shape is configured. The number of each of the second plate unit and the third plate unit to be laminated is set such that the storage capacity of the bipolar lead-acid battery 1 is set to have a desired numerical value.

A negative electrode terminal 107 is fixed to the first plate 11, and the negative electrode 110 fixed to the first plate 11 and the negative electrode terminal 107 are electrically connected.

A positive electrode terminal 108 is fixed to the fourth plate 14, and the positive electrode 120 fixed to the fourth plate 14 and the positive electrode terminal 108 are electrically connected.

The electrolytic layer 105 is formed of, for example, a glass fiber mat impregnated with an electrolyte containing sulfuric acid.

The first to fourth plates 11, 12, 13, and 14 are formed of, for example, a well-known molding resin. The first to fourth plates 11, 12, 13, and 14 are fixed to each other by an appropriate method such that the inside is sealed so that the electrolyte does not flow out.

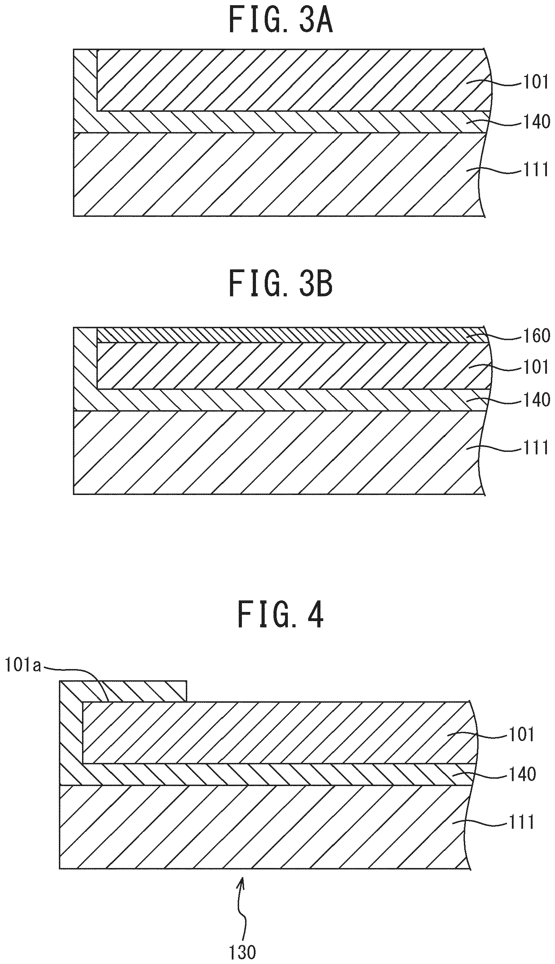

The positive electrode 120 includes a positive electrode lead layer 101 that is formed of lead or lead alloy and is disposed on the one surface of the substrate 111, a positive active material layer 103 that is disposed on the positive electrode lead layer 101, and an adhesive layer 140 that is disposed between the one surface of the substrate 111 and the positive electrode lead layer 101 and bonds the one surface of the substrate 111 and the positive electrode lead layer 101. That is, the adhesive layer 140, the positive electrode lead layer 101, and the positive active material layer 103 are laminated in this order on the one surface of the substrate 111 (the surface facing upward in the paper plane in FIGS. 2, 3A, and 3B) .

The negative electrode 110 includes a negative electrode lead layer 102 that is formed of lead or lead alloy and is disposed on the other surface of the substrate 111, a negative active material [NAM] layer 104 that is disposed on the negative electrode lead layer 102, and an adhesive layer (not illustrated) that is disposed between the other surface of the substrate 111 and the negative electrode lead layer 102 and bonds the other surface of the substrate 111 and the negative electrode lead layer 102.

The positive electrode 120 and the negative electrode 110 are electrically connected by an appropriate method.

The negative electrode 110 and the positive active material layer 103 are not illustrated in cross-sectional views of the bipolar electrode in FIGS. 2, 3A, and 3B and the subsequent drawings.

In the bipolar lead-acid battery 1 of the first embodiment having such a configuration, as described above, the substrate 111, the positive electrode lead layer 101, the positive active material layer 103, the negative electrode lead layer 102, and the negative active material layer 104 constitutes the bipolar electrode 130. The bipolar electrode is a single electrode that functions as both a positive electrode and a negative electrode.

The bipolar lead-acid battery 1 of the first embodiment has a battery configuration in which a plurality of cell members each formed with the electrolytic layer 105 interposed between the positive electrode 120 and the negative electrode 110 are alternately laminated and assembled so that the cell members are disposed in series.

Further, in the bipolar lead-acid battery 1 of the first embodiment, the adhesive layer 140 disposed between the one surface of the substrate 111 and the positive electrode lead layer 101 is formed of a cured product of a reaction-curing type adhesive that is cured by a reaction between a main agent containing an epoxy resin and a curing agent containing an amine compound.

Since this cured product is resistant to sulfuric acid (hereinafter, a property of being resistant to sulfuric acid may be referred to as "sulfuric acid resistance"), and the sulfuric acid does not infiltrate into the interface between the positive electrode lead layer 101 and the adhesive layer 140 even in a case where the adhesive layer 140 is immersed in the sulfuric acid with a concentration of 38% by mass at a temperature of 60°C for four weeks, the cured product is less likely to decompose, deteriorate, corrode, or the like even when the cured product comes in contact with the electrolyte. Therefore, since the positive electrode lead layer 101 and the adhesive layer 140 are firmly bonded, even when growth occurs in the positive electrode lead layer 101 due to corrosion caused by a sulfuric acid contained in the electrolyte, the electrolyte is prevented from infiltrating into the interface between the positive electrode lead layer 101 and the adhesive layer 140.

As described in more detail with reference to FIGS. 3A and 3B, since the adhesive layer 140 is resistant to the sulfuric acid, the positive electrode lead layer 101 and the adhesive layer 140 are firmly bonded in FIG. 3A. Therefore, as illustrated in FIG. 3B, even when a film 160 of a corrosion product (lead oxide) is formed on the surface of the positive electrode lead layer 101, the growth of the film 160 of the corrosion product is suppressed by the adhesive layer 140 to prevent the film 160 of the corrosion product from infiltrating into the interface between the positive electrode lead layer 101 and the adhesive layer 140.

As a result, even when growth occurs in the positive electrode lead layer 101 due to corrosion caused by the sulfuric acid contained in the electrolyte, the positive electrode lead layer 101 and the adhesive layer 140 are less likely to be peeled off, and thus the electrolyte is prevented from infiltrating into the interface between the positive electrode lead layer 101 and the adhesive layer 140. Therefore, it is difficult for the corrosion caused by sulfuric acid to reach the back surface of the positive electrode lead layer 101 (the surface facing the substrate 111) to cause a short circuit or the like and cause a defect of deterioration in battery performance.

Examples of the thermoplastic resin forming the substrate 111 include an acrylonitrile-butadiene-styrene copolymer (ABS resin) and polypropylene. These thermoplastic resins have excellent moldability and excellent sulfuric acid resistance. Therefore, even when the electrolyte comes into contact with the substrate 111, the substrate 111 is less likely to decompose, deteriorate, corrode, or the like.

Although the adhesive layer 140 is formed of a cured product obtained by curing a reaction-curing type adhesive, the reaction-curing type adhesive is a type of adhesive that is cured by mixing a main agent containing an epoxy resin and a curing agent containing an amine compound, and allowing a reaction between the main agent and the curing agent. Since such a reaction-curing type adhesive can be cured at room temperature (for example, 20°C or higher and 40°C or lower), the reaction-curing type adhesive can be cured at a temperature that does not easily affect the metal composition of the lead or lead alloy forming the positive electrode lead layer 101 and the negative electrode lead layer 102. Further, the reaction-curing type adhesive is less likely to adversely affect the thermoplastic resin forming the substrate 111. Further, the reaction-curing type adhesive has advantages such as high adhesiveness, long working life, and the like. It is preferable that the mixing ratio of the main agent and the curing agent in the reaction-curing type adhesive is 44 parts by mass or less of the curing agent with respect to 100 parts by mass of the main agent.

As the epoxy resin contained in the main agent, for example, at least one of a bisphenol A type epoxy resin and a bisphenol F type epoxy resin may be used. These epoxy resins may be used alone or in combination of two or more thereof.

Examples of the amine compound to be contained in the curing agent include an aliphatic polyamine compound, an alicyclic polyamine compound, and an aromatic polyamine compound. These amine compounds may be used alone or in combination of two or more thereof.

Specific examples of the aliphatic polyamine compound include aliphatic primary amines such as triethylene-tetramine ($C_6H_{18}N_4$) and the like, and aliphatic secondary amines such as triethylenetetramine and the like. Specific examples of the alicyclic polyamine compound include alicyclic primary amines such as isophoronediamine ($C_{10}H_{22}N_2$) and the like. Specific examples of the aromatic polyamine compound include aromatic primary amines such as diami-nodiphenylmethane ($C_{13}H_{14}N_2$) and the like.

[Second Embodiment]

A bipolar lead-acid battery of a second embodiment will be described in detail with reference to FIG. 4. However, since the configuration and effects of the bipolar lead-acid battery of the second embodiment are substantially the same as those of the first embodiment, only the different parts will be described, and the description of the same parts will be omitted.

In the first embodiment, the adhesive layer 140 is disposed between the one surface of the substrate 111 and the positive electrode lead layer 101 (that is, on a surface of both surfaces of the positive electrode lead layer 101 on a side facing the substrate 111), and is not disposed on a surface of both surfaces of the positive electrode lead layer 101 on a side facing the positive active material layer 103. On the other hand, in the second embodiment, as illustrated in FIG. 4, the adhesive layer 140 extends from between the substrate 111 and the positive electrode lead layer 101 to a peripheral edge portion 101a of the surface of both surfaces of the positive electrode lead layer 101 on the side facing the positive active material layer 103, and comes into close contact with the peripheral edge portion 101a to cover the peripheral edge portion 101a.

In such a bipolar lead-acid battery of the second embodiment, since the adhesive layer 140 covers the peripheral edge portion 101a of the surface of both surfaces of the positive electrode lead layer 101 on the side facing the positive active material layer 103, even when growth occurs in the positive electrode lead layer 101 due to corrosion caused by the sulfuric acid contained in the electrolyte, the electrolyte is prevented from infiltrating into the interface between the positive electrode lead layer 101 and the adhesive layer 140.

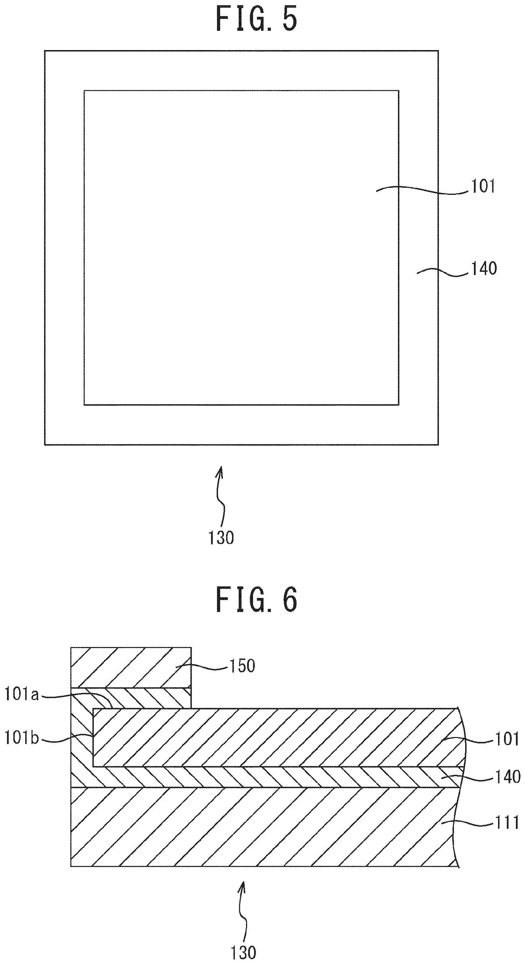

The peripheral edge portion 101a is an outer portion of the surface of both surfaces of the positive electrode lead layer 101 on the side facing the positive active material layer 103, and has a frame shape. Even when the adhesive layer 140 disposed on the surface of both surfaces of the positive electrode lead layer 101 on the side facing the positive active material layer 103 covers a part of the frame-like peripheral edge portion 101a, the above effect is exhibited. However, it is more preferable that the entire frame-like peripheral edge portion 101a is covered, so that the above effect is further exhibited, and the battery performance is extremely less likely to deteriorate. That is, it is more preferable that the adhesive layer 140 disposed on the surface of both surfaces of the positive electrode lead layer 101 on the side facing the positive active material layer 103 may have a frame shape as illustrated in FIG. 5. In FIG. 5, the positive active material layer 103 is not illustrated.

As illustrated in FIG. 4, the adhesive layer 140 covering the peripheral edge portion 101a may be integrated with the adhesive layer 140 disposed between the one surface of the substrate 111 and the positive electrode lead layer 101. That is, the end portion of the adhesive layer 140, disposed between the one surface of the substrate 111 and the positive electrode lead layer 101, on the peripheral edge portion 101a side may extend to the peripheral edge portion 101a. Of course, the adhesive layer 140 covering the peripheral edge portion 101a may not be continuous with the adhesive layer 140 disposed between the one surface of the substrate 111 and the positive electrode lead layer 101 and may be separated.

[Third Embodiment]

A bipolar lead-acid battery of a third embodiment will be described in detail with reference to FIG. 6. However, since the configuration and effects of the bipolar lead-acid battery of the third embodiment are substantially the same as those of the second embodiment, only the different parts will be described, and the description of the same parts will be omitted.

In the second embodiment, the adhesive layer 140 covers the peripheral edge portion 101a of the surface of both surfaces of the positive electrode lead layer 101 on the side facing the positive active material layer 103. However, in the third embodiment, as illustrated in FIG. 6, a covering member 150 is further disposed on the adhesive layer 140 covering the peripheral edge portion 101a. The covering member 150 is fixed to the substrate 111 with the adhesive layer 140 interposed therebetween. At this time, it is more preferable that the covering member 150 is disposed so as to press the positive electrode lead layer 101.

In such a bipolar lead-acid battery of the third embodiment, even when growth occurs in the positive electrode lead layer 101 due to corrosion caused by the sulfuric acid contained in the electrolyte, the electrolyte is further prevented from infiltrating into the interface between the positive electrode lead layer 101 and the adhesive layer 140.

The covering member 150 may be resistant to sulfuric acid and resistant to corrosion caused by the sulfuric acid, and examples of materials for the covering member 150 include sulfuric acid resistant resins, metals (for example, stainless steel), and ceramics.

[Fourth Embodiment]

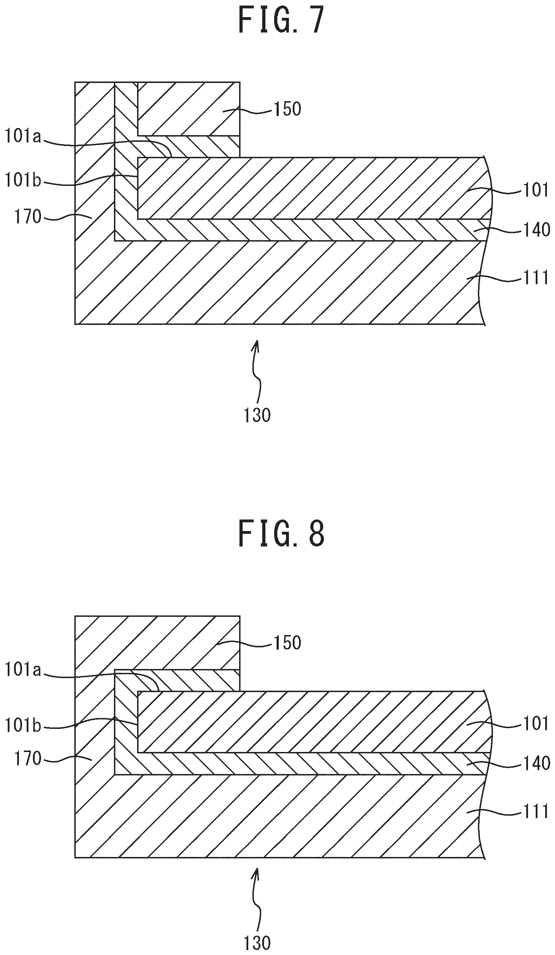

A bipolar lead-acid battery of a fourth embodiment will be described in detail with reference to FIG. 7. However, since the configuration and effects of the bipolar lead-acid battery of the fourth embodiment are substantially the same as those of the third embodiment, only the different parts will be described, and the description of the same parts will be omitted.

In the third embodiment, the substrate 111 has a flat plate shape, but in the fourth embodiment, the substrate 111 has a shape having a flange-like frame 170 at a peripheral edge tip end. That is, as illustrated in FIG. 7, a plate-like portion extends from the peripheral edge tip end of the substrate 111 in a direction perpendicular to the one surface and the other surface of the substrate 111, and this plate-like portion is the frame 170. Therefore, the frame 170 is disposed so as to surround a peripheral edge tip end 101b of the positive electrode lead layer 101. In addition, the frame 170 is formed of a resin.

In the bipolar lead-acid battery of the fourth embodiment, the covering member 150 is fixed to frame 170 with the adhesive layer 140 interposed therebetween. Therefore, it is easy to dispose the covering member 150 so as to press the positive electrode lead layer 101. When the covering member 150 is disposed so as to press the positive electrode lead layer 101, the growth of the film 160 of the corrosion product to the peripheral edge portion 101a is further suppressed.

The covering member 150 and the frame 170 can be fixed by an adhesive layer formed of an adhesive. The adhesive layer that fixes the covering member 150 and the frame 170 and the adhesive layer 140 that bonds the substrate 111 and the positive electrode lead layer 101 may be integrated as illustrated in FIG. 7 or may be separated.

Further, as illustrated in FIG. 7, the frame 170 and the substrate 111 may be an integrated member or may be separate members.

[Fifth Embodiment]

A bipolar lead-acid battery of a fifth embodiment will be described in detail with reference to FIG. 8. However, since the configuration and effects of the bipolar lead-acid battery of the fifth embodiment are substantially the same as those of the fourth embodiment, only the different parts will be described, and the description of the same parts will be omitted.

In the fourth embodiment, the covering member 150 is a member separate from the frame 170, but in the fifth embodiment, the covering member 150 is a member integrated with the frame 170. Therefore, the covering member 150 is formed of the same resin as the frame 170. With such a configuration, it is easier to dispose the covering member 150 so as to press the positive electrode lead layer 101.

[Examples]

In the bipolar lead storage batteries of the first to fifth embodiments, a plate-like member formed of ABS resin that can be used as the substrate 111, and a foil-like member formed of lead that can also be used as the positive electrode lead layer 101 were bonded using various adhesives to produce test pieces, and a test was conducted to evaluate the sulfuric acid resistance of each test piece. That is, after heating sulfuric acid with a concentration of 38% by mass to 60°C and immersing the test piece in the sulfuric acid for one week, two weeks, and four weeks, the bonding state of the test piece was observed, and the peeling strength when the foil-like member formed of lead was peeled off from the plate-like member formed of ABS resin was measured.

In addition, the working life was evaluated for each adhesive. Further, the coefficient of thermal expansion and the dynamic viscoelasticity of the cured product of each adhesive were measured. The measuring method will be described below.

The coefficient of thermal expansion of the cured product of the adhesive was measured using a thermomechanical analyzer (TMA) manufactured by METTLER TOLEDO. The measurement conditions are an applied load of 0.05N, a temperature range of -50°C to 150°C, and a temperature increase rate of 10°C/min. In addition, the sample has a length of 20 mm, a width of 2 mm, and a thickness of 0.1 mm. Although the measurement was performed by a tension method with a gauge length of 10 mm, a compression method may be used in a case where the sample is small.

It is preferable to set the temperature range for measurement to be equal to or higher than the operating temperature range of the bipolar lead-acid battery. The coefficient of thermal expansion was obtained from the slope in a temperature range of -15°C to 60°C using the following equation. The results are shown in Table 1.

$$\Delta L = \alpha(T2 - T1)L$$

In the above equation, $\Delta L$ represents the amount of thermal expansion (mm), $\alpha$ represents the coefficient of thermal expansion (ppm), T1 represents the temperature (°C) before change, T2 represents the temperature (°C) after change, and L represents the length of the sample (mm).

When the coefficients of thermal expansion of the substrate, the adhesive layer, and the positive electrode lead layer are significantly different, strain is easily caused at the interface, and thus it is preferable to reduce the difference in coefficient of thermal expansion between the substrate, the adhesive layer, and the positive electrode lead layer.

The dynamic viscoelasticity of the cured product of the adhesive was measured using a dynamic viscoelasticity measuring device (DMA), trade name RSA-G2, manufactured by TA Instruments, and the glass transition temperature was measured from the tan $\delta$ peak. The measurement conditions were a temperature range of -50°C to 150°C, a frequency of 1 Hz, a gauge length of 20 mm, a strain amount of 0.2%, and a temperature increase rate of 5°C/min, and the measurement was performed by the tension method. The results are shown in Table 1. Since the operating temperature range of the bipolar lead-acid battery is -15°C to 60°C, the glass transition temperature is preferably 60°C or higher.

A test for evaluating the sulfuric acid resistance of the test piece, and the measurement of the coefficient of thermal expansion and the dynamic viscoelasticity of the cured product of the adhesive were performed after confirming the degree of curing of the cured product of the adhesive using a Fourier transform infrared spectrophotometer. Description will be made below. By an attenuated total reflection method (ATR method) using a Fourier transform infrared spectrophotometer 660 or 610 manufactured by Agilent Technologies, Inc., the reaction rate of the epoxy group of the cured product of the adhesive was measured and the degree of curing of the cured product of the adhesive was thus obtained.

A diamond was used as a crystal for the ATR method, and a silver-cadmium-tellurium compound (MCT) detector was used as a detector. The measurement conditions were a scanning rate of 25 kHz, an incident angle of 45 degrees, and a resolution of 4 cm$^{-1}$.

From the obtained spectrum, the intensity of the absorption peak (913 cm$^{-1}$) of the CO stretching vibration of the epoxy group and the intensity of the absorption peak (1508 cm$^{-1}$) of the CC stretching vibration of the phenyl group were obtained, and from the ratio of these intensities ([intensity at 913 cm$^{-1}$]/[[intensity at 1508 cm$^{-1}$]), the degree of curing of the cured product of the adhesive was obtained. Then, the test for evaluating the sulfuric acid resistance of the test piece, and the measurement of the coefficient of thermal expansion and the dynamic viscoelasticity of the cured product of the adhesive were performed after confirming that the degree of curing was 0.15 or less and the cured product was sufficiently cured.

Examples and Comparative Examples are described below.

(Example 1) Epoxy Adhesive EPIFOAM (Registered Trademark) K-9487 Manufactured by SOMAR Corporation

A main agent K-9487A contains a bisphenol A type epoxy resin, and the content of the epoxy resin in the main agent is 80% to 90% by mass. A curing agent K-9487B contains a modified aromatic polyamine compound and 4,4'-methylenedianiline, the content of the modified aromatic polyamine compound in the curing agent is 65% to 75% by mass, and the content of 4,4'-methylenedianiline is 25% to 35% by mass. In addition, the mixing ratio of the main agent and the curing agent is 44 parts by mass of the curing agent with respect to 100 parts by mass of the main agent.

The working life of this adhesive at 25°C was 60 minutes, and the bonding work was easily performed.

Further, when the bonding state of the test piece after immersion in the sulfuric acid for four weeks was observed, the sulfuric acid did not infiltrate into the interface between the foil-like member formed of lead and the adhesive layer, and the bonding state was good. Further, when the peeling strength was measured, it was found that the interface between the foil-like member formed of lead and the adhesive layer was peeled off, and there was almost no difference in peeling strength between before and after immersion in the sulfuric acid.

(Example 2) Epoxy Adhesive A Manufactured by Nagase ChemteX Corporation

A main agent XNR3114 contains a bisphenol A type epoxy resin and para-tertiary butyl phenyl glycidyl ether, the content of the epoxy resin in the main agent is 80% to 90% by mass, and the content of para-tertiary butyl phenyl glycidyl ether is 10% to 20% by mass.

A curing agent XNH3114 contains a modified aliphatic polyamine compound, nonylphenol, m-xylylenediamine, triethylenetetramine, and isophoronediamine. The content of the modified aliphatic polyamine compound in the curing agent is 32% by mass, the content of nonylphenol is 7.4% by mass, the content of m-xylylenediamine is 11% by mass, and the content of triethylenetetramine is 15% by mass, and the content of isophoronediamine is 35% by mass.

The mixing ratio of the main agent and the curing agent is 25 parts by mass of the curing agent with respect to 100 parts by mass of the main agent.

The working life of this adhesive at 25°C was 60 minutes, and the bonding work was easily performed.

Further, when the bonding state of the test piece after immersion in the sulfuric acid for four weeks was observed, the sulfuric acid did not infiltrate into the interface between the foil-like member formed of lead and the adhesive layer, and the bonding state was good. Further, when the peeling strength was measured, it was found that the interface between the foil-like member formed of lead and the adhesive layer was peeled off, and there was almost no difference in peeling strength between before and after immersion in the sulfuric acid.

(Example 3) Epoxy Adhesive B Manufactured by Nagase ChemteX Corporation

A main agent XNR3106 contains a bisphenol A type epoxy resin, a bisphenol F type epoxy resin, and para-tertiary butyl phenyl glycidyl ether. The content of the bisphenol A type epoxy resin in the main agent is 40% to 50% by mass, the content of the bisphenol F type epoxy resin is 30% to 40% by mass, and the content of para-tertiary butyl phenyl glycidyl ether is 10% to 20% by mass.

A curing agent XNH3103 contains a modified polyamine compound, phenol, nonylphenol, m-xylylenediamine, triethylenetetramine, and isophoronediamine. The content of the modified polyamine compound in the curing agent is 25% by mass, the content of phenol is 4% by mass, the content of nonylphenol is 11% by mass, the content of m-xylylenediamine is 11% by mass, the content of triethylenetetramine is 23% by mass, and the content of isophoronediamine is 26% by mass.

The mixing ratio of the main agent and the curing agent is 25 parts by mass of the curing agent with respect to 100 parts by mass of the main agent.

The working life of this adhesive at 25°C was 20 minutes, which was a short time for bonding work.

Further, when the bonding state of the test piece after immersion in the sulfuric acid for four weeks was observed, the sulfuric acid did not infiltrate into the interface between the foil-like member formed of lead and the adhesive layer, and the bonding state was good. Further, when the peeling strength was measured, it was found that the interface between the foil-like member formed of lead and the adhesive layer was peeled off, and there was almost no difference in peeling strength between before and after immersion in the sulfuric acid.

(Comparative Example 1) Epoxy Adhesive C Manufactured by Nagase ChemteX Corporation

Amain agent AV138 contains a bisphenol A type epoxy resin, a bisphenol F type epoxy resin, and silica. A curing agent HV998 contains a polyamidoamine compound and diethylenetriamine.

The mixing ratio of the main agent and the curing agent is 40 parts by mass of the curing agent with respect to 100 parts by mass of the main agent.

The working life of this adhesive at 25°C was 35 minutes, which was a short time for bonding work.

Further, when the bonding state of the test piece after immersion in the sulfuric acid for one week was observed, it was found that the adhesive layer interface was corroded by the sulfuric acid. Further, when the peeling strength was measured, the interface between the plate-like member formed of ABS resin and the adhesive layer was peeled off, and the peeling strength was significantly reduced by immersion in the sulfuric acid. Further, when the bonding state of the test piece after immersion in the sulfuric acid for four weeks was observed, the bonding between the foil-like member formed of lead and the adhesive layer was not maintained.

(Comparative Example 2) Epoxy Adhesive Manufactured by Pelnox Limited

A main agent EPOTACK (trade name) AD-45 contains a bisphenol A type epoxy resin and crystalline silica. A curing agent PELCURE (trade name) HQ-1W contains an aliphatic polyamine compound, triethylenetetramine, and titanium dioxide.

The mixing ratio of the main agent and the curing agent is 30 to 70 parts by mass of the curing agent with respect to 100 parts by mass of the main agent.

The working life of this adhesive at 25°C was 120 minutes, and the bonding work was easily performed.

Further, when the bonding state of the test piece after immersion in the sulfuric acid for one week was observed, it was found that the adhesive layer interface was corroded by the sulfuric acid. Further, when the peeling strength was measured, the interface between the plate-like member formed of ABS resin and the adhesive layer was peeled off, and the peeling strength was significantly reduced by immersion in the sulfuric acid. Further, when the bonding state of the test piece after immersion in the sulfuric acid for four weeks was observed, the bonding between the foil-like member formed of lead and the adhesive layer was not maintained.

(Comparative Example 3) Epoxy Adhesive 1500 Manufactured by Cemedine Co., Ltd.

The main agent contains a bisphenol A type epoxy resin, and the curing agent contains a polyamidoamine compound.

In addition, the mixing ratio of the main agent and the curing agent is 100 parts by mass of the curing agent by mass with respect to 100 parts by mass of the main agent.

The working life of this adhesive at 25°C was 60 minutes, and the bonding work was easily performed.

Further, when the bonding state of the test piece after immersion in the sulfuric acid for one week was observed, it was found that the adhesive layer interface was corroded by the sulfuric acid. Further, when the peeling strength was measured, the interface between the plate-like member formed of ABS resin and the adhesive layer was peeled off, and the peeling strength was significantly reduced by immersion in the sulfuric acid.

Further, when the bonding state of the test piece after immersion in the sulfuric acid for four weeks was observed, the bonding between the foil-like member formed of lead and the adhesive layer was not maintained.

(Comparative Example 4) Acrylic Adhesive SUPER X No. 8008 Manufactured by Cemedine Co., Ltd.

The adhesive is a one component type adhesive containing acrylic-modified silicone.

The working life of this adhesive at 25°C was 2 minutes, and the bonding work was less likely to be performed.

Further, when the bonding state of the test piece after immersion in the sulfuric acid for one week was observed, the sulfuric acid did not infiltrate into the interface between the foil-like member formed of lead and the adhesive layer, and the bonding state was poor. Further, when the peeling strength was measured, the interface between the plate-like member formed of ABS resin and the adhesive layer was peeled off, and the peeling strength was significantly reduced by immersion in the sulfuric acid. Further, when the bonding state of the test piece after immersion in the sulfuric acid for four weeks was observed, the bonding between the foil-like member formed of lead and the adhesive layer was not maintained.

(Comparative Example 5) Double-Sided Pressure Sensitive Adhesive Tape Y-4914 Manufactured by 3M Japan Limited

The pressure sensitive adhesive used in the double-sided pressure sensitive adhesive tape is an acrylic pressure sensitive adhesive.

When the bonding state of the test piece after immersion in the sulfuric acid for one week was observed, it was found that the sulfuric acid infiltrated into the interface between the foil-like member formed of lead and the pressure sensitive adhesive layer to cause the pressure sensitive adhesive layer to swell, the interface between the foil-like member formed of lead and the pressure sensitive adhesive layer was peeled off, and the bonding between the foil-like member formed of lead and the pressure sensitive adhesive layer was not maintained.

[Table 1]

|  | Unit | Ex. 1 | Ex. 2 | Ex. 3 | Com. Ex. 1 | Com. Ex. 2 | Com. Ex. 3 | Com. Ex. 4 | Com. Ex. 5 |
|---|---|---|---|---|---|---|---|---|---|
| Main agent |  | K-9487A | XNR3114 | XNR3106 | AV138 | AD-45 | 1500 | X8008 | Double-sided tape |
| Curing agent |  | K-9487B | XNH3114 | XNH3103 | HV998 | HQ-1W | 1500 | - | - |
| Coefficient of thermal expansion | ppm/K | 98 | 71 | 98 | 71 | 118 | 238 | 74 | - |
| Glass transition temperature | °C | 86 | 89 | 81 | 98 | 80 | 64 | -48 | 8 |

Reference Signs List

1       bipolar lead-acid battery
101     positive electrode lead layer
101a    peripheral edge portion
101b    peripheral edge tip end
102     negative electrode lead layer
103     positive active material layer
104     negative active material layer
105     electrolytic layer
110     negative electrode
111     substrate
120     positive electrode
130     bipolar electrode
140     adhesive layer
150     covering member
170     frame

**Claims**

1.  A bipolar lead-acid battery comprising:

    a bipolar electrode having a positive electrode formed on one surface of a substrate and a negative electrode formed on the other surface,
    wherein the positive electrode includes a positive electrode lead layer that is formed of lead or lead alloy and disposed on the one surface of the substrate, a positive active material layer that is disposed on the positive electrode lead layer, and an adhesive layer that is disposed between the one surface of the substrate and the positive electrode lead layer and bonds the one surface of the substrate and the positive electrode lead layer,
    the substrate is formed of a thermoplastic resin,
    the adhesive layer is formed of a cured product of a reaction-curing type adhesive that is cured by a reaction between a main agent containing an epoxy resin and a curing agent containing an amine compound, and
    even in a case where the adhesive layer is immersed in a sulfuric acid with a concentration of 38% by mass at a temperature of 60°C for four weeks, the sulfuric acid does not infiltrate into an interface between the positive electrode lead layer and the adhesive layer.

2.  The bipolar lead-acid battery according to claim 1, wherein
    the thermoplastic resin is an

    acrylonitrile-butadiene-styrene copolymer or
    polypropylene.

3.  The bipolar lead-acid battery according to claim 1 or 2, wherein
    the epoxy resin is at least one of a bisphenol A type epoxy resin and a bisphenol F type epoxy resin.

4.  The bipolar lead-acid battery according to any one of claims 1 to 3, wherein
    the amine compound is at least one of an aliphatic polyamine compound, an alicyclic polyamine compound, and an aromatic polyamine compound.

5.  The bipolar lead-acid battery according to any one of claims 1 to 4, wherein
    a mixing ratio of the main agent and the curing agent in the reaction-curing type adhesive is 44 parts by mass or less of the curing agent with respect to 100 parts by mass of the main agent.

6.  The bipolar lead-acid battery according to any one of claims 1 to 5, wherein
    the adhesive layer extends to a peripheral edge portion of a surface of both surfaces of the positive electrode lead layer on a side facing the positive active material layer, and comes into close contact with the peripheral edge portion to cover the peripheral edge portion.

# FIG. 1

# FIG. 2

# FIG. 3A

— 101
— 140
— 111

# FIG. 3B

— 160
— 101
— 140
— 111

# FIG. 4

101a —

— 101
— 140
— 111

130

# FIG. 5

101

140

130

# FIG. 6

150

101a

101b

101

140

111

130

# FIG. 7

# FIG. 8

# FIG. 9A

220
240
210

# FIG. 9B

260
220
240
210

# FIG. 9C

260
220
240
210

## INTERNATIONAL SEARCH REPORT

| International application No. |
| --- |
| **PCT/JP2021/032702** |

**A.    CLASSIFICATION OF SUBJECT MATTER**

*H01M 4/14*(2006.01)i; *H01M 4/68*(2006.01)i; *H01M 10/18*(2006.01)i
FI:    H01M10/18; H01M4/14 Q; H01M4/68 Z

According to International Patent Classification (IPC) or to both national classification and IPC

**B.    FIELDS SEARCHED**

Minimum documentation searched (classification system followed by classification symbols)
H01M4/14; H01M4/68; H01M10/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2585847 B2 (SHIN KOBE ELECTRIC MACHINERY COMPANY LIMITED) 05 December 1996 (1996-12-05) column 4, line 10 to column 6, line 15, fig. 1-2 | 1-6 |
| Y | WO 2005/101550 A1 (NTT DATA EX TECHNO CORPORATION) 27 October 2005 (2005-10-27) specification, page 12, line 22 to page 18, line 27 | 1-6 |
| Y | JP 2010-3446 A (GS YUASA CORPORATION) 07 January 2010 (2010-01-07) paragraphs [0013]-[0018], fig. 1 | 1-6 |
| Y | CN 104752673 A (PANASONIC STORAGE BATTERY (SHENYANG) COMPANY LIMITED; PANASONIC CORPORATION) 01 July 2015 (2015-07-01) paragraphs [0098]-[0126] | 1-6 |
| Y | WO 94/19837 A1 (TROJAN BATTERY COMPANY) 01 September 1994 (1994-09-01) specification, page 10, line 21 to page 11, line 4, fig. 2 | 6 |
| A | US 4513060 A (E. I. DU PONT DE NEMOURS AND COMPANY) 23 April 1985 (1985-04-23) | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/032702**

| Patent document cited in search report | | | Publication date (day/month/year) | Patent family member(s) | | | Publication date (day/month/year) |
|---|---|---|---|---|---|---|---|
| JP | 2585847 | B2 | 05 December 1996 | (Family: none) | | | |
| WO | 2005/101550 | A1 | 27 October 2005 | JP | 2005-294024 | A | |
| | | | | paragraphs [0051]-[0075] | | | |
| JP | 2010-3446 | A | 07 January 2010 | (Family: none) | | | |
| CN | 104752673 | A | 01 July 2015 | (Family: none) | | | |
| WO | 94/19837 | A1 | 01 September 1994 | US | 5593797 | A | |
| | | | | column 7, lines 8-36, fig. 2 | | | |
| | | | | CA | 2156489 | A | |
| | | | | AU | 3733993 | A | |
| | | | | KR | 10-1996-0701486 | A | |
| | | | | JP | 8-506926 | A | |
| US | 4513060 | A | 23 April 1985 | EP | 161736 | A1 | |
| | | | | AU | 3849985 | A | |
| | | | | CA | 1260179 | A | |
| | | | | DK | 57485 | A | |
| | | | | JP | 60-210672 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013073420 A